# EUROPÄISCHE PATENTANMELDUNG

(11) **EP 1 898 105 A2**
(43) Veröffentlichungstag der Anmeldung: **12.03.2008**
(21) Anmeldenummer: 07012206.4
(22) Anmeldetag: 21.06.2007
(51) Int. Cl.: F16B 5/06

(54) **Schnellverschluss zum Verbinden zweier Bauteile**

(30) Priorität: 06.09.2006 DE 202006013666 U
(71) Anmelder: Böllhoff Verbindungstechnik GmbH, 33649 Bielefeld (DE)
(72) Erfinder: Süßenbach, Rainer, 33803 Steinhagen (DE)
(74) Vertreter: Hauck Patent- und Rechtsanwälte

(57) **Zusammenfassung**

Schnellverschluss zum Verbinden eines ersten und zweiten Bauteils, mit einem Aufnahmeteil 2, das mit dem ersten Bauteil A verbindbar ist und zwei einander gegenüberliegende Federschenkel 10 aufweist, und einem Verschlussbolzen 4, der an dem zweiten Bauteil B um eine Achse X des Schnellverschlusses drehbar anbringbar ist und einen Antriebsabschnitt 24, einen schaftförmigen Zwischenabschnitt 26 und einen Verschlusskörper 28 aufweist, wobei der Verschlussbolzen 4 in das Aufnahmeteil 2 axial einführbar ist, um mit dem Aufnahmeteil 2 eine Rastverbindung zu bilden, wenn das Aufnahmeteil 2 und der Verschlussbolzen 4 sich relativ zueinander in mindestens einer als Rastposition dienenden vorgegebenen Drehposition befinden, und die Federschenkel 10 des Aufnahmeteils 2 mit dem Verschlusskörper 28 des Verschlussbolzens 4 so zusammenwirken, dass der Verschlussbolzen 4 selbsttätig in die Rastposition gedreht wird, wenn sich der Verschlussbolzen 4 beim Einführen in das Aufnahmeteil 2 in einer von der Rastposition abweichenden Drehposition befindet, dadurch gekennzeichnet, dass das Aufnahmeteil 2 aus Kunststoff besteht und als in Umfangsrichtung geschlossener Kastenprofil-Körper 6 ausgebildet ist, der zwei als Federschenkel 10 dienende Wandabschnitte aufweist, welche bezüglich des übrigen Kastenprofil-Körpers 6 radial nach innen versetzt und an diesem federnd angeformt sind.

## Beschreibung

Die vorliegende Erfindung betrifft einen Schnellverschluss zum Verbinden zweier Bauteile nach dem Oberbegriff des Anspruchs 1.

Schnellverschlüsse dieser Gattung sind aus DE 91 01 514 U1 und DE 94 06 129 U1 des Anmelders bekannt. Bei diesen vorbekannten Schnellverschlüssen besteht das Aufnahmeteil aus einer Federklammer, die aus Federstahl hergestellt ist und einen ringförmigen Befestigungsabschnitt aufweist, an dem zwei axial hierzu verlaufende Federschenkel angeformt sind. Der Verschlussbolzen ist vorzugsweise aus Kunststoff hergestellt und besteht aus einem Griffteil und einem "knebelförmigen" Endteil und einer als Rastkontur ausgebildeten Einschnürung zwischen dem Endteil und dem Griffteil. Das Endteil und die Rastkontur haben eine relativ komplizierte geometrische Form mit an dem Endteil vorgesehenen, diametral verlaufenden Schrägflächen. Diese Schrägflächen haben den Zweck, den Verschlussbolzen in die Rastposition zu drehen, wenn der Verschlussbolzen beim Einführen in die Federklammer eine von der Rastposition abweichende Drehposition einnimmt. Wenngleich sich dieser Schnellverschluss in der Praxis bewährt hat, hat er doch gewisse Nachteile, die insbesondere aus der Verwendung einer Federklammer aus Federstahl herrühren. Die Herstellung der Federklammer ist insbesondere wegen der Vergütung des Federstahls vergleichsweise kostspielig. Ferner neigt die Federklammer zur Ermüdung bei häufiger Betätigung, zum Verlust der Federkraft bei Überdehnung, zu Bruch bei Stoßlast und zu Korrosionsproblemen. Der Verschlussbolzen ist aufgrund seiner komplizierten geometrischen Form schwierig in der Herstellung und lässt hinsichtlich Funktionssicherheit (Sicherheit des selbsttätigen Drehens in die Rastposition beim Einführvorgang) manchmal zu wünschen übrig.

Diese Nachteile sollen durch die vorliegende Erfindung vermieden werden. Insbesondere liegt der vorliegenden Erfindung die Aufgabe zugrunde, einen Schnellverschluss zum Verbinden zweier Bauteile der im Anspruch 1 angegebenen Gattung so weiterzubilden, dass bei möglichst geringen Herstellungskosten und hoher Funktionssicherheit des Schnellverschlusses die Gefahr einer Ermüdung, einer Überdehnung und eines Bruches der Federschenkel des Aufnahmeteils vermieden wird.

Diese Aufgabe wird durch den im Anspruch 1 definierten Schnellverschluss gelöst.

Bei dem erfindungsgemäß ausgebildeten Schnellverschluss besteht das Aufnahmeteil aus Kunststoff und ist als in Umfangsrichtung geschlossener Kastenprofil-Körper ausgebildet, der zwei als Federschenkel dienende Wandabschnitte aufweist, welche bezüglich des übrigen Kastenprofil-Körpers radial nach innen versetzt und an diesem federnd angeformt sind.

Die Ausbildung des Aufnahmeteils als Kastenprofil-Körper ermöglicht die Herstellung des Aufnahmeteils aus Kunststoff. Damit sind die Nachteile, die sich im Stand der Technik aufgrund der Verwendung einer Federklammer aus Federstahl ergeben, vermieden.

In weiterer Ausgestaltung der Erfindung ist vorgesehen, dass die Federschenkel des Aufnahmeteils mit dem übrigen Kastenprofil-Körper jeweils durch zwei Wellenabschnitte verbunden sind, die zusammen mit den Federschenkeln in auf der Achse senkrecht stehenden Radialebenen einen trapezförmigen Verlauf haben.

Vorzugsweise ist das Aufnahmeteil mit dem ersten Bauteil durch eine Schnappverbindung verbindbar, die von Flanschabschnitten und Vorsprüngen des Kastenprofil-Körpers gebildet wird.

Wie noch genauer erläutert wird, ist der Verschlussbolzen durch eine vereinfachte geometrische Form gekennzeichnet, die für eine hohe Funktionssicherheit beim Auffinden der Rastposition während des Einführvorganges gewährleistet.

Das aus Kunststoff bestehende Aufnahmeteil kann durch Spritzgießen hergestellt werden, was die Herstellung deutlich vereinfacht und die Herstellungskosten des Schnellverschlusses gegenüber den eingangs diskutierten Schnellverschlüssen des Standes der Technik um nahezu die Hälfte reduziert. Die Verwendung von Kunststoff anstelle von Federstahl für das Aufnahmeteil führt zu zahlreichen weiteren Vorteilen, wie zum Beispiel Vermeidung von Korrosion, vereinfachtes Recycling und elektromagnetische Verträglichkeit der Materialien des Schnellverschlusses, Vermeidung der Gefahr von Bruch, Überdehnung und Minderung der Haltekraft des Aufnahmeteils, hohe Funktionssicherheit und lange Lebensdauer des Schnellverschlusses.

Anhand der Zeichnungen wird ein Ausführungsbeispiel der Erfindung näher erläutert. Es zeigt:
Fig. 1 einen Längsschnitt durch einen erfindungsgemäß ausgebildeten Schnellverschluss im eingebauten Zustand (Rastposition);
Fig. 2 einen Schnitt in Blickrichtung der Pfeile II-II in Fig. 1;
Fig. 3 einen Schnitt in Blickrichtung der Pfeile III-III in Fig. 1;
Fig. 4 eine Teilschnittdarstellung des in Fig. 1 gezeigten Schnellverschlusses vor dem Einführvorgang;
Fig. 5 eine Teilschnittdarstellung des Schnellverschlusses während eines Einführvorganges, bei dem sich der Verschlussbolzen in einer von der Rastposition abweichenden Drehposition befindet;
Fig. 6 einen Schnitt in Blickrichtung der Pfeile VI-VI in Fig. 5;
Fig. 7 eine Seitenansicht des Aufnahmeteils des Schnellverschlusses;
Fig. 8 eine um 90° gedrehte Seitenansicht des Aufnahmeteils in Fig. 7;
Fig. 9 eine Schnittdarstellung in Blickrichtung der Pfeile IX-IX in Fig. 8;
Fig. 10 eine Ansicht des Aufnahmeteils von unten;
Fig. 11 eine perspektivische Ansicht des Aufnahmeteils von oben;
Fig. 12 eine perspektivische Ansicht des Aufnahmeteils von unten;
Fig. 13 eine Seitenansicht des Verschlusskörpers des Verschlussbolzens des Schnellverschlusses;
Fig. 14 eine um 90° gedrehte Seitenansicht des Verschlusskörpers in Fig. 13;
Fig. 15 eine Ansicht des Verschlusskörpers von unten;
Fig. 16 einen Schnitt in Blickrichtung der Pfeile XVI-XVI in Fig. 13;
Fig. 17 eine perspektivische Ansicht des Verschlussbolzens;

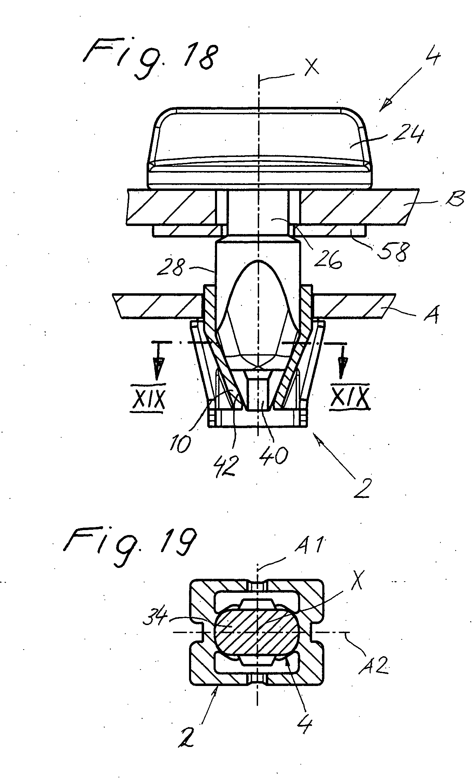

Fig. 18 eine Schnittdarstellung des Schnellverschlusses beim Öffnen;
Fig. 19 eine Schnittdarstellung in Blickrichtung der Pfeile XIX-XIX in Fig. 18.

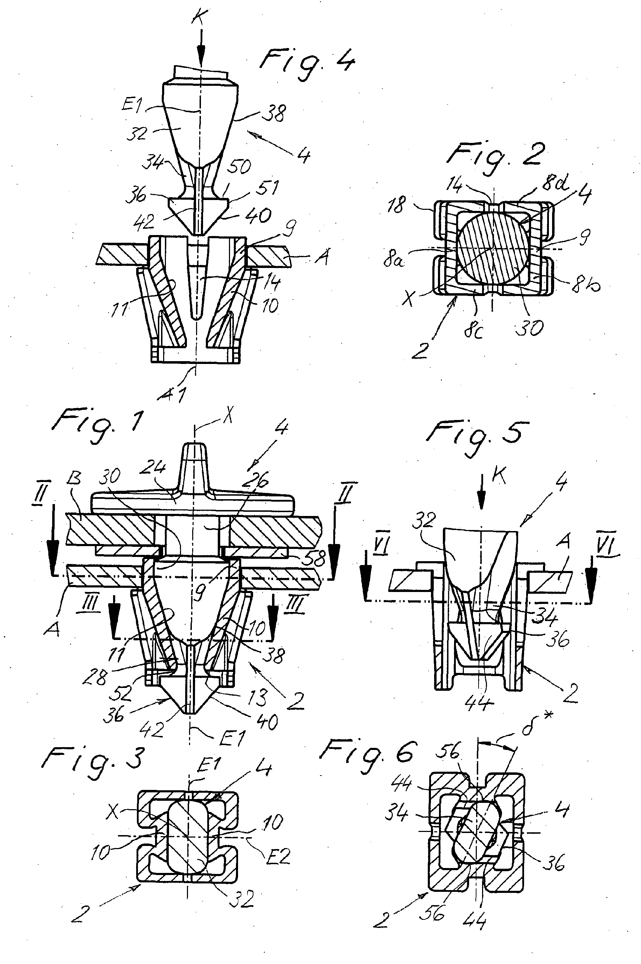

Der in Fig. 1 dargestellte Schnellverschluss dient zum Verbinden zweier Bauteile A, B. Er besteht aus einem Aufnahmeteil 2 und einem Verschlussbolzen 4, von denen das Aufnahmeteil 2 mit dem Bauteil A fest verbindbar ist und der Verschlussbolzen 4 am Bauteil B drehbar und axial unverlierbar gehalten ist. Bei dem Bauteil A handelt es sich beispielsweise um ein Gehäuse, und das Bauteils B ist beispielsweise ein Deckel zum Verschließen des Gehäuses.

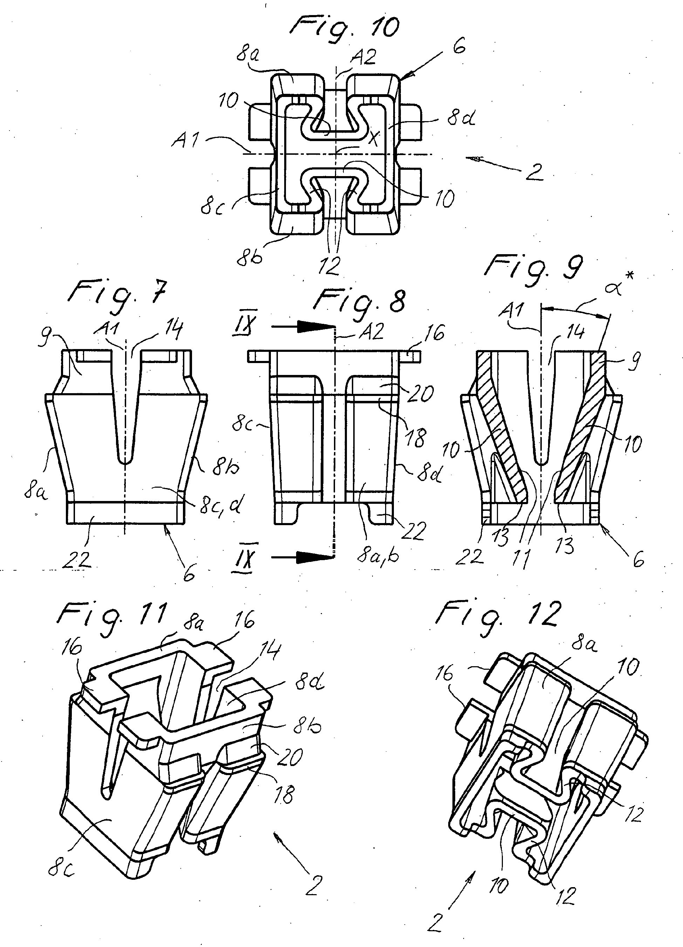

In Fig. 1 befindet sich der Schnellverschluss in seinem geschlossenen Zustand, in dem der Verschlussbolzen 4 eine von zwei Rastpositionen einnimmt, die um 180° gegenüber einer zentralen Achse X des Schnellverschlusses versetzt sind. Um den Schnellverschluss zu schließen, ist lediglich eine axiale Relativbewegung zwischen den Bauteilen A und B (siehe Pfeil K in Fig. 4) erforderlich, bei dem der Verschlussbolzen 4 in das Aufnahmeteil 2 eingeführt wird. Befindet sich der Verschlussbolzen 4 in einer von den beiden Rastpositionen abweichenden Drehposition, so wird er durch Zusammenwirken zwischen dem Verschlussbolzen 4 und dem Aufnahmeteil 2 selbsttätig - maximal um 90° - in eine der beiden Rastpositionen gedreht, wie im Folgenden noch genauer erläutert wird.

### Das Aufnahmeteil

Das in den Figuren 7 bis 12 dargestellte Aufnahmeteil 2 besteht aus Kunststoff, vorzugsweise aus einem Polyamid oder einem Elastomer, bei dem es sich um ein thermoplastisches oder auch vernetztes Elastomer handeln kann. Der Kunststoff hat eine hohe Dehnung von beispielsweise 50 % (Polyamid) oder sogar bis zu 200 % (Elastomer), um dem Aufnahmeteil 2 die für seine Funktion erforderliche Elastizität zu verleihen. Das Aufnahmeteil 2 wird zweckmäßigerweise durch Spritzgießen hergestellt.

Wie insbesondere aus den Figuren 7 bis 12 hervorgeht, besteht das Auf nahmeteil 2 aus einem in Umfangsrichtung geschlossenen Kastenprofil-Körper 6 mit vier Wänden 8a, b, c, d. Die gegenüberliegenden Wände 8a, b sind bezüglich einer durch die Achse X verlaufende Axialebene A 1 spiegelsymmetrisch ausgebildet, und die beiden anderen Wände 8c, d sind spiegelsymmetrisch ausgebildet bezüglich einer Axialebene A2, die gegenüber der Axialebene A 1 um 90° gedreht ist. Die vier Wände 8a, b, c, d sind über abgerundete Eckbereiche miteinander verbunden, um den in Umfangsrichtung geschlossenen, an seinen beiden axialen Enden offenen Kastenprofil-Körper 6 zu bilden.

Der Kastenprofil-Körper 6 hat einen oberen Endbereich 9, der einen quadratischen Innenumfang hat und in dem die Wände 8a, b parallel zur Axialebene A1 und die Wände 8c, d parallel zur Axialebene A2 verlaufen. Von dem Endbereich 9 aus verlaufen die gegenüberliegenden Wände 8a, 8b schräg nach innen, wobei sie mit der Axialebene A1 einen vorgegebenen Winkel einschließen. Die Wände 8c, 8d verlaufen ebenfalls schräg nach innen, schließen jedoch mit der Axialebene A2 einen wesentlich kleineren Winkel ein.

In dem Bereich unterhalb des Endbereiches 9 sind die gegenüberliegenden Wände 8a, 8b mit zwei nach innen versetzten Wandabschnitten versehen, die mit den übrigen Wandabschnitten der Wände 8a, 8b durch Wellenabschnitte 12 federnd verbunden sind, um Federschenkel 10 zu bilden, siehe insbesondere Figuren 9, 10 und 12. Jeder Federschenkel 10 mit den beiden Wellenabschnitten 12 hat in Radialebenen (Zeichnungsebene der Fig. 10) einen trapezförmigen Verlauf, der sich von radial innen nach radial außen verjüngt. Durch den trapezförmigen Verlauf und die Eigenschaften des verwendeten Kunststoffs wird den Federschenkeln 10 eine hohe Flexibilität mit ausreichender Rückstellkraft verliehen, die für die Funktion des Schnellverschlusses erforderlich ist, wie noch genauer erläutert wird.

Die Wandstärke der Federschenkel 10 nimmt von dem (in Fig. 9) unteren Ende keilförmig zum oberen Ende hin ab. Auch werden die in Radialebenen liegenden Abmessungen der Federschenkel 10 und der Wellenabschnitte 12 vom unteren Ende zum oberen Ende hin kleiner, so dass der trapezförmige Verlauf der Federschenkel 10 und Wellenabschnitte 12 sich von unten nach oben verjüngt (siehe Fig. 12). Hierdurch ergibt sich in der Rastposition des Schnellverschlusses eine über der axialen Länge gleichmäßige Spannungsverteilung.

Aufgrund der Neigung der Wände 8a, 8b sind auch die Federschenkel 10 entsprechend geneigt, so dass die Innenflächen 11 der Federschenkel 10 mit der Axialebene A1 jeweils einen Neigungswinkel α* einschließen (Fig. 9). Die Federschenkel 10, die sowohl an ihren Innenflächen 11 wie auch an ihren Außenflächen eben ausgebildet sind, werden an ihren vom Endbereich 9 abgewandten axialen Enden von scharfkantigen Stirnflächen 13 begrenzt.

Das Aufnahmeteil 2 wird mit dem Bauteil A durch eine Schnappverbindung verbunden. Zu diesem Zweck ist der Kastenprofil-Körper 6 an den Wänden 8c, d mit je einem längs verlaufenden Schlitz 14 versehen, der an seinem (in den Figuren 7 und 9) oberen Ende offen ist. Die Schlitze 14 verleihen dem Kastenprofil-Körper 6 die zum Einschnappen der Schnappverbindung erforderliche Flexibilität.

Die Schnappverbindung wird von Flanschabschnitten 16, Vorsprüngen 18 und Schrägflächen 20 des Kastenprofil-Körpers 6 gebildet. Im dargestellten Ausführungsbeispiel sind vier Flanschabschnitte 16 vorgesehen, die an den Wänden 8c, d angeformt sind und von denen jeweils zwei beidseitig zu je einem Schlitz 14 angeordnet sind, siehe Fig. 11. Ferner sind vier Vorsprünge 18 und vier Schrägflächen 20 vorgesehen, die an den anderen beiden Wänden 8a, b am unteren Ende des Endbereichs 9 des Aufnahmeteils 2 angeordnet sind.

Die federschenkelfrei ausgebildeten Wände 8c, 8d sind durch Verlängerungen 22 nach unten über die unteren Enden der Federschenkel 10 hinaus verlängert, wie insbesondere in den Figuren 8, 9 und 11 zu sehen ist.

### Der Verschlussbolzen

Der Verschlussbolzen 4 besteht, wie in Fig. 1 zu sehen ist, aus einem Antriebsabschnitt 24, einem schaftförmigen Zwischenabschnitt 26 und einem Verschlusskörper 28.

Der Antriebsabschnitt 24 ist im dargestellten Ausführungsbeispiel als Handgriff ausgebildet, um den Schnellverschluss manuell öffnen zu können. Er kann jedoch mit einem Mehrkant, Schlitz oder dergleichen zum Betätigen mittels eines Werkzeuges versehen werden.

Der schaftförmige Zwischenabschnitt 26 ist zylindrisch ausgebildet und verbindet den Antriebsabschnitt 24 mit dem Verschlusskörper 28.

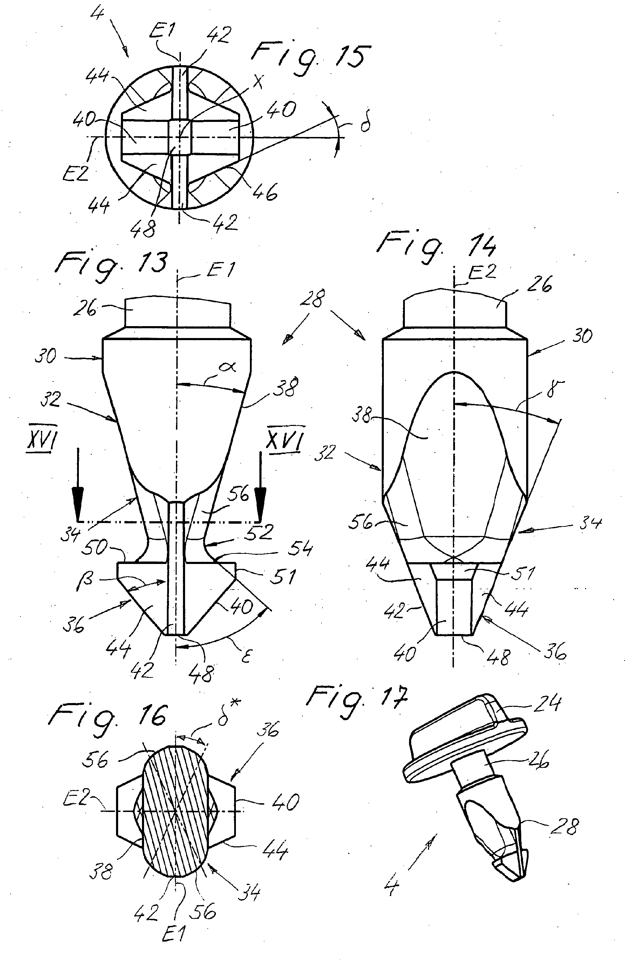

Zur Beschreibung des Verschlusskörpers 28 wird zusätzlich auf die Figuren 13 bis 17 Bezug genommen. Wie insbesondere die Figuren 13, 14 und 17 zeigen, setzt sich der Verschlusskörper 28 aus einem zylindrischen Schaftabschnitt 30, einem sich nach unten verjüngenden Anlageabschnitt 32, einem sich weiter verjüngenden Konturabschnitt 34 und einem erweiterten Kopfabschnitt 36 zusammen. Die Abschnitte 30, 32, 34 und 36 gehen nahtlos ineinander über und haben zum Teil Flächen, die sich über mehr als zwei Abschnitte erstrecken.

Der sich an den zylindrischen Schaftabschnitt 30 anschließende Anlageabschnitt 32 hat zwei ebene Anlageflächen 38, die bezüglich einer Axialebene E1 spiegelsymmetrisch angeordnet sind, mit dieser einen Neigungswinkel α einschließen und bezüglich einer um 90° versetzten Axialebene E2 mittig angeordnet sind. Außerhalb der Anlageflächen 38 besteht der Anlageabschnitt 32 aus einer axialen Verlängerung des zylindrischen Schaftabschnittes 30, wie insbesondere in Fig. 14 zu sehen ist. Der Anlageabschnitt 32 hat daher einen Querschnitt, der sich von einem kreisrunden Querschnitt am oberen Ende in einen zunehmend flacher werdenden ovalen Abschnitt im unteren Bereich ändert.

Der Kopfabschnitt 36 hat, wie insbesondere in den Figuren 13 bis 15 zu sehen ist, zwei ebene rechteckige Führungsflächen 40, zwei ebene rechteckige Ausschubflächen 42 und vier ebene Schrägflächen 44. Die Führungsflächen 40 sind spiegelsymmetrisch zu der Axialebene E1 angeordnet, zu dieser um einen Neigungswinkel β (Fig. 13) geneigt und bezüglich der Axialebene E2 mittig angeordnet. Die Ausschubflächen 42 sind spiegelsymmetrisch zu der Axialebene E2 angeordnet, zu dieser um einen Neigungswinkel γ (Fig. 14) geneigt und bezüglich der Axialebene E1 mittig angeordnet.

Der Neigungswinkel β liegt beispielsweise in der Größenordnung von 40°. Der Neigungswinkel γ ist vorzugsweise größer als 22°, wie noch genauer erläutert wird.

Jede der vier Schrägflächen 44 verläuft zwischen einer Führungsfläche 40 und einer Ausschubfläche 42 so, dass sie jeweils bezüglich sowohl der Axialebene E1 wie auch der Axialebene E2 geneigt ist. Wie in Fig. 15 zu sehen ist, schließen die in einer Radialebene liegenden Seitenränder 46 der Schrägflächen 44 mit der Axialebene E2 jeweils einen Winkel δ ein.

Die Neigung der Flächen 40, 42 und 44 ist so gewählt, dass der Kopfabschnitt 36 eine Suchspitze bildet, deren Querschnitt sich von oben nach unten (in den Figuren 13, 14) verjüngt. Die rechteckigen Führungsflächen 40 und die rechteckigen Ausschubflächen 42 enden in einer ebenen, rechteckigen Stirnfläche 48 des Kopfabschnittes 36 (Figuren 13 bis 15). An der Rückseite des Kopfabschnittes 36 ist eine in einer Radialebene liegende Schulter 50 vorgesehen (Fig. 13), die zusammen mit dem Konturabschnitt 34 einen Hinterschnitt bildet. Die Führungsflächen 40 sind mit der Schulter 50 über Außenflächen 51 verbunden, die parallel zu der Axialebene E1 verlaufen.

Der Konturabschnitt 34 verbindet den Anlageabschnitt 38 mit dem Kopfabschnitt 36. Auf zwei gegenüberliegenden Seiten wird der Konturabschnitt 34 von den Ausschubflächen 42 begrenzt, die von dem Kopfabschnitt 36 aus in den Konturabschnitt 34 hinein bis zum Anlageabschnitt 32 verlängert sind. Auf den um 90° dazu versetzten Seiten wird der Konturabschnitt 34 von den Anlageflächen 38 begrenzt, die vom Anlageabschnitt 32 aus in den Konturabschnitt 34 hinein verlängert sind. Die Anlageflächen 38 sind jeweils über einen Radius 52 und eine tangential hierzu verlaufende kurze Fläche 54 mit der Rückseite (Schulter 50) des Kopfabschnittes 36 verbunden, wobei die Flächen 54 mit der Axialebene E1 einen Winkel ε einschließen (Fig. 13). Der Winkel ε liegt beispielsweise in der Größenordnung von 48°. Die Anlageflächen 38 und die Ausschubflächen 42 im Bereich des Konturabschnittes 34 sind jeweils durch einen abgerundeten Eckbereich 56 miteinander verbunden, so dass der Konturabschnitt 34 in Radialebenen einen an ein Rechteck angenäherten ovalen Querschnitt hat (Fig. 16), der in Richtung auf den Kopfabschnitt 36 zunehmend flacher wird.

Die Bedeutung der beschriebenen Geometrie des Verschlusskörpers 28 und des Verschlussbolzens 4 wird im Zusammenhang mit einer Beschreibung der Funktionsweise des Schnellverschlusses näher erläutert.

Der Verschlussbolzen besteht vorzugsweise ebenfalls aus Kunststoff, beispielsweise aus einem faserverstärkten Polyamid, kann jedoch auch aus anderen Werkstoffen wie zum Beispiel einem metallischen Werkstoff hergestellt werden. Als Herstellverfahren kommen beispielsweise Zink-, Aluminium-Druckguss, PIM-Verfahren (Powder Injection Molding) und ähnliche metallische Fertigungsverfahren in Frage.

### Montage des Aufnahmeteils und Verschlussteils an den Bauteilen A, B

Um das Aufnahmeteil 2 am Bauteil A zu befestigen (Figuren 1 und 4), wird das Aufnahmeteil 2 von oben in eine quadratische Öffnung des Bauteils A eingeführt. Hierbei werden die schräg verlaufenden Wände 8a, b des Kastenprofil-Körpers 6 zur Axialebene A1 hin nach innen verformt, was durch die beiden Schlitze 14 ermöglicht wird. Der Einführvorgang ist beendet, wenn die Flanschabschnitte 16 an dem Bauteil A anschlagen und die Vorsprünge 18 durch Auswärtsfedern der Wände 8a, b des Kastenprofil-Körpers 6 hinter die Rückseite des Bauteils A geschnappt sind. Der axiale Abstand zwischen der Unterseite der Flanschabschnitte 16 und der Oberseite der Vorsprünge 18 ist etwas größer als die Dicke des Bauteils A. Die Schrägflächen 20 zwischen den Vorsprüngen 18 und den Wänden 8a, b des Endbereiches 15 sorgen jedoch für einen spielfreien Sitz des Bauteils A am Aufnahmeteil 2, da es zwischen den Flanschabschnitten 16 und den Schrägflächen 20 zu einer Art Presspassung für das Bauteil A kommt. Das Aufnahmeteil 2 ist somit spielfrei sowohl in axialer wie auch in radialer Richtung am Bauteil A festgelegt.

Um den Verschlussbolzen 4 an dem Bauteil B zu montieren, wird der Verschlussbolzen 4 mit dem Verschlusskörper 28 voraus durch eine Durchlassöffnung des Bauteils B hindurch gesteckt und mittels einer Beilagscheibe 58 verliersicher gehalten. Die Beilagscheibe 58 ist beispielsweise mit radialen Schlitzen (nicht gezeigt) versehen, um die Beilagscheibe 58 über den Verschlusskörper 28 hinweg auf den Zwischenabschnitt 26 des Verschlussbolzens 4 aufschieben zu können. Eine andere Möglichkeit der Verliersicherung für den Verschlussbolzen 4 besteht darin, dass der Verschlusskörper 28 kraftschlüssig durch die Durchlassöffnung des Bauteils B hindurch gepresst wird.

In jedem Fall wird der Verschlussbolzen 4 am Bauteil B verliersicher so gehalten, dass er um die zentrale Achse X des Schnellverschlusses drehbar ist und in axialer Richtung mit Hilfe des Antriebsabschnittes 24 an dem Bauteil B axial abgestützt wird.

### Rastposition des Schnellverschlusses

Fig. 1 zeigt den Schnellverschluss im geschlossenen Zustand, in dem sich das Aufnahmeteil 2 und der Verschlussbolzen 4 relativ zueinander in einer von zwei Rastpositionen befinden. In den Rastpositionen nimmt der Verschlussbolzen 4 relativ zu dem Aufnahmeteil 2 eine solche Drehposition ein, dass die beiden Anlageflächen 38 des Verschlussbolzens 4 an den entsprechend geneigten Innenflächen 11 der Federschenkel 10 anliegen. Dies ist dann der Fall, wenn die Axialebenen E1 und E2 des Verschlussbolzens 4 mit den Axialebenen A1 und A2 des Aufnahmeteils 2 zusammenfallen. Wegen der Spiegelsymmetrie der aneinander anliegenden Flächen 11, 38 des Aufnahmeteils 2 und Verschlussbolzens 4 sind daher zwei um 180° gegeneinander versetzte Rastpositionen vorhanden.

In den Rastpositionen, in denen der Schnellverschluss die Bauteile A und B miteinander verbindet, ist das Aufnahmeteil 2 am Bauteil A befestigt, und der Verschlussbolzen 4 mit dem Bauteil B drehbar verbunden, wie dies vorstehend beschrieben wurde. Hierbei stützt sich der Antriebabschnitt 24 des Verschlussbolzens 4 an der Oberseite des Bauteils B ab. Der durchmesserverringerte schaftförmige Zwischenabschnitt 26 erstreckt sich mit Spiel durch die Durchgangsöffnung des Bauteils B. Der Verschlusskörper 28 des Verschlussbolzens 4 wird wie folgt von dem Aufnahmeteil 2 aufgenommen (Fig. 1):
Der zylindrische Schaftabschnitt 30 des Verschlusskörpers 28 sitzt innerhalb des federschenkelfreien quadratischen Endbereiches 9 des Aufnahmeteils 2. Da der Durchmesser des zylindrischen Schaftbereiches 26 der Seitenlänge des quadratischen Innenumfangs des Endbereiches 9 entspricht, ergibt sich ein spielfreier Sitz in radialer Richtung. Da ferner der quadratische Endbereich 9 des Aufnahmeteils 2 innerhalb der Aufnahmeöffnung des Bauteils A angeordnet ist, ist trotz der im Aufnahmeteil 2 vorgesehenen Schlitze 14 ein radiales Ausweichen des Aufnahmeteils 2 verhindert.
Die Anlageflächen 38 des Verschlusskörpers 28 des Verschlussbolzens 4 liegen über ihrer gesamten Länge und Breite an den Innenflächen 11 der Federschenkel 10 an. Zweckmäßigerweise ist der Neigungswinkel α* der Innenflächen 11 der Federschenkel 10 im unverformten Zustand etwas größer als der Neigungswinkel α der Anlageflächen 38 des Verschlussbolzens 4. Beispielsweise liegt der Neigungswinkel α* in der Größenordnung von 17° und der Neigungswinkel α in der Größenordnung von 15°. Auf diese Weise wird eine satte Anlage zwischen dem Verschlussbolzen 4 und dem Aufnahmeteil 2 im Bereich der Flächen 11 und 38 erreicht. Wie bereits erwähnt, sorgen die keilförmig sich ändernde Wandstärke der Federschenkel sowie der sich in Axialrichtung verjüngende trapezförmige Verlauf der Federschenkel 10 und Wellenabschnitte 12 für eine über der axialen Länge gleichmäßige Spannungsverteilung.
In den Rastpositionen liegen ferner die scharfkantigen Stirnseiten 13 der Federschenkel 10 an den Radien 52 oder Flächen 54 des Konturabschnittes 34 des Verschlussbolzens 4 an. Hierdurch wird zum einen ein Ausgleich von Fertigungstoleranzen in axialer Richtung ermöglicht. Zum anderen verhindern die scharfkantigen Stirnseiten 13 der Federschenkel 10 ein "Ausknöpfen" des Verschlussbolzens 4 aus dem Aufnahmeteil 2 bei entsprechender axialer Belastung des Schnellverschlusses, da die scharfkantigen Stirnseiten 13 den Hinterschnitt zwischen dem Konturabschnitt 34 und dem Kopfabschnitt 36 nicht verlassen können.
Durch den beschriebenen Eingriff zwischen dem Verschlussbolzen 4 und dem Aufnahmeteil 2 entsteht somit ein spielfreier Sitz des Schnellverschlusses sowohl in axialer wie auch in queraxialer Richtung. Die vom Schnellverschluss übertragbare Axialkraft (axiale Lastaufnahme) wird durch den Querschnitt des Konturabschnittes 34 des Verschlussbolzens 4 bestimmt, der die Form eines an ein Rechteck angenäherten Ovals hat, wie dies in Fig. 3 zu sehen ist.

### Schließen des Schnellverschlusses

Um den Schnellverschluss zu schließen, wird der Verschlussbolzen 4 in Achsrichtung (Pfeil K in Fig. 4) in das Aufnahmeteil 2 eingedrückt. Dies erfolgt in der Weise, dass das Bauteil B eine entsprechende Axialbewegung relativ zum dem Bauteil A ausführt. Hierbei gelangt der Verschlussbolzen 4 selbsttätig in eine der beiden Rastpositionen, wobei zwei Schließvarianten zu unterscheiden sind:
Eine Schließvariante ist gegeben, wenn der Verschlussbolzen 4 beim Einführen in das Aufnahmeteil 2 relativ zu diesem eine Drehposition einnimmt, die einer der beiden Rastpositionen entspricht, wie dies in Fig. 4 dargestellt ist. In diesem Fall legen sich zunächst die Eckbereiche zwischen den Außenflächen 51 und den Führungsflächen 40 des Schließkopfes 36 an die Innenflächen 11 der Federschenkel 10 an und gleiten an diesen entlang. Hierdurch werden die Federschenkel 10 des Aufnahmeteils 2 radial nach außen verformt, bis die Außenflächen 51 des Kopfabschnittes 36 die unteren Enden der Federschenkel 10 passiert haben. Hierauf springen die Federschenkel 10 aufgrund ihrer Rückstelleigenschaft nach innen zurück, so dass der Schnellverschluss die oben beschriebene Rastposition einnimmt. Der Schnellverschluss befindet sich dann in seinem geschlossenen Zustand, in dem er die beiden Bauteile A und B miteinander verbindet.
Die andere Schließvariante ergibt sich, wenn der Verschlussbolzen 4 in einer Drehposition relativ zu dem Aufnahmeteil 2 zugeführt wird, die von den Rastpositionen abweicht. In diesem Fall wird der Verschlussbolzen 4 während des Einführvorganges selbsttätig in eine seiner beiden Rastpositionen gedreht, und zwar wie folgt:
   Wenn beim Einführvorgang der Kopfabschnitt 36 des Verschlussbolzens 4 mit den Federschenkeln 10 in Anlage gelangt, üben die Federschenkel 10 eine entsprechende Federkraft auf den Kopfabschnitt 36 aus. Hierdurch wird der Verschlussbolzen 4 um die Achse X so gedreht, dass die Schrägflächen 44 des Kopfabschnittes 36 in Anlage mit den Innenflächen 11 der Federschenkel 10 gelangen.

Wie bereits erwähnt, schließen die in Radialebenen liegenden Seitenränder der Schrägflächen 44 mit der Axialebene E2 einen Winkel δ (Fig. 15) ein. Der Winkel δ ist größer als der Selbsthemmungswinkel, der sich aus dem Reibbeiwert zwischen den Materialien des Aufnahmeteils 2 und des Verschlussbolzens 4 ergibt. Bei einer Materialkombination Kunststoff/Kunststoff ergibt sich beispielsweise ein Reibbeiwert von 0,4. Hieraus lässt sich der Selbsthemmungswinkel wie folgt ableiten: INV tg 0,4 = 22°. Der Winkel δ wird daher in diesem Fall größer als 22°, beispielsweise in der Größenordnung von 25°, gewählt, um eine Gleitbewegung zwischen dem Verschlussbolzen 4 und dem Aufnahmeteil 2 im Bereich der Schrägflächen 44 nicht zu behindern.

Wenn nun der Kopfabschnitt 36 das untere Ende der Federschenkel 10 passiert hat, gelangt der Konturabschnitt 34 des Verschlussbolzens 4 in Anlage mit den Innenflächen 11 der Federschenkel 10. Genauer gesagt, greifen die Innenflächen 11 der Federschenkel 10 an den abgerundeten Eckbereichen 56 des Konturabschnittes 34 an (siehe Figuren 6 und 16): Die unter Vorspannung stehenden Federschenkel 10 üben eine entsprechende Federkraft auf den Verschlussbolzen 4 aus, wodurch der Verschlussbolzen in eine der beiden Rastpositionen gedreht wird. Wichtig hierbei ist, dass die Anlage zwischen den Innenflächen 11 der Federschenkel 10 und den abgerundeten Eckbereichen 56 des Konturabschnittes 34 unter einem Winkel erfolgt, der größer als der Selbsthemmungswinkel ist (Der in Fig. 6 zu sehende Winkel δ* entspricht dem Winkel δ in Fig. 15 und ist bezüglich des Winkels δ um 90° gedreht).

Die beim Einführvorgang erfolgende Drehung des Verschlussbolzens 4 in die Rastposition erfolgt somit in zwei Stufen: Die Drehung in der ersten Stufe wird durch Zusammenwirken der Federschenkel 10 mit den Schrägflächen 44 des Kopfabschnittes 36 bewirkt, und die Drehung in der zweiten Stufe wird durch Zusammenwirken der Federschenkel 10 mit den abgerundeten Eckbereichen 56 des Konturabschnittes 34 bewirkt. Je nach der Ausgangsposition des Verschlussbolzens 4 erfolgt die Drehbewegung links- oder rechtsdrehend, wobei es sich maximal um eine Vierteldrehung handelt.

Die Verlängerungen 22 am unteren Ende der Wände 8c, d dienen als Seitenschutz und verhindern beim Drehen des Verschlussbolzens 4, dass der Verschlussbolzen 4 die Wände 8c, d an ihren unteren Enden "überfährt".

### Öffnen des Schnellverschlusses

Um den Schnellverschluss zu öffnen, wird der Verschlussbolzen 4 aus der Rastposition über den Antriebsabschnitt 24 manuell oder mittels eines Werkzeuges (nicht gezeigt) um 90° gedreht. Die Ausschubflächen 42 am Kopfabschnitt 36 und Konturabschnitt 34 gelangen dann in Anlage mit den Federschenkeln 10. Der Neigungswinkel γ, den die Ausschubflächen 42 mit der Axialebene E2 einschließen, ist größer als der Selbsthemmungswinkel, der sich aus dem Reibbeiwert zwischen den Materialien des Aufnahmeteils 2 und Verschlussbolzens 4 ergibt und der in der gleichen Weise wie in Verbindung mit den Winkel δ beschrieben bestimmt werden kann. Er ist somit im beschriebenen Ausführungsbeispiel größer als 22° und beispielsweise in der Größenordnung von 25°. Die axiale Kraftkomponente der von den Federschenkeln 10 auf den Verschlussbolzen 4 ausgeübten Federkraft sorgt dann dafür, dass der Verschlussbolzen 4 selbsttätig aus dem Aufnahmeteil 2 herausgedrückt wird, wodurch der Schnellverschluss geöffnet und die Verbindung zwischen den Bauteilen A und B gelöst wird.

## Patentansprüche

1. Schnellverschluss zum Verbinden eines ersten und zweiten Bauteils, mit
einem Aufnahmeteil (2), das mit dem ersten Bauteil (A) verbindbar ist und zwei einander gegenüberliegende Federschenkel (10) aufweist, und
einem Verschlussbolzen (4), der an dem zweiten Bauteil (B) um eine Achse (X) des Schnellverschlusses drehbar anbringbar ist und einen Antriebsabschnitt (24), einen schaftförmigen Zwischenabschnitt (26) und einen Verschlusskörper (28) aufweist,
wobei der Verschlussbolzen (4) in das Aufnahmeteil (2) axial einführbar ist, um mit dem Aufnahmeteil (2) eine Rastverbindung zu bilden, wenn das Aufnahmeteil (2) und der Verschlussbolzen (4) sich relativ zueinander in mindestens einer als Rastposition dienenden vorgegebenen Drehposition befinden, und
die Federschenkel (10) des Aufnahmeteils (2) mit dem Verschlusskörper (28) des Verschlussbolzens (4) so zusammenwirken, dass der Verschlussbolzen (4) selbsttätig in die Rastposition gedreht wird, wenn sich der Verschlussbolzen (4) beim Einführen in das Aufnahmeteil (2) in einer von der Rastposition abweichenden Drehposition befindet,
**dadurch gekennzeichnet, dass**
das Aufnahmeteil (2) aus Kunststoff besteht und als in Umfangsrichtung geschlossener Kastenprofil-Körper (6) ausgebildet ist, der zwei als Federschenkel (10) dienende Wandabschnitte aufweist, welche bezüglich des übrigen Kastenprofil-Körpers (6) radial nach innen versetzt und an diesem federnd angeformt sind.

2. Schnellverschluss nach Anspruch 1, **dadurch gekennzeichnet, dass** die Federschenkel (10) des Aufnahmeteils (2) mit dem übrigen Kastenprofil-Körper (6) jeweils durch zwei Wellenabschnitte (12) verbunden sind, die zusammen mit den Federschenkeln (10) in auf der Achse (X) senkrecht stehenden Radialebenen einen trapezförmigen Verlauf haben.

3. Schnellverschluss nach Anspruch 2, **dadurch gekennzeichnet, dass** die in den Radialebenen liegenden Abmessungen der Federschenkel (10) und der Wellenabschnitte (12) in Einführrichtung zunehmend größer werden, so dass sich der trapezförmige Verlauf der Federschenkel und der Wellenabschnitte entgegen der Einführrichtung verjüngt.

4. Schnellverschluss nach einem der vorhergehenden Ansprüche, **dadurch gekennzeichnet, dass** die Wandstärke der Federschenkel (10) in Einführrichtung kontinuierlich kleiner wird.

5. Schnellverschluss nach einem der vorhergehenden Ansprüche, **dadurch gekennzeichnet, dass** die Federschenkel (10) in scharfkantig ausgebildeten Stirnflächen (13) enden, die in der Rastposition des Schnellverschlusses an dem Verschlussbolzen (4) zu seiner axialen Festlegung anliegen.

6. Schnellverschluss nach einem der vorhergehenden Ansprüche, **dadurch gekennzeichnet, dass** das Aufnahmeteil (2) mit dem ersten Bauteil (A) durch eine Schnappverbindung verbindbar ist.

7. Schnellverschluss nach Anspruch 6, **dadurch gekennzeichnet, dass** der Kastenprofil-Körper (6) an zwei gegenüberliegenden Seiten einseitig offene Schlitze (14) aufweist, um dem Aufnahmeteil (2) eine ausreichende Flexibilität zum Einführen in eine Aufnahmeöffnung des ersten Bauteils (A) zu verleihen.

8. Schnellverschluss nach Anspruch 6 oder 7, **dadurch gekennzeichnet, dass** die Schnappverbindung zwischen dem Aufnahmeteil (2) und dem ersten Bauteil (A) von Flanschabschnitten (16) an zwei gegenüberliegenden Seiten der Wand (8) des Kastenprofil-Körpers (6) und Vorsprüngen (18) an den beiden anderen Seiten gebildet wird, wobei die Flanschabschnitte (16) von den Vorsprüngen (18) einen vorgegebenen axialen Abstand zum Erfassen des ersten Bauteils (A) haben.

9. Schnellverschluss nach Anspruch 8, **dadurch gekennzeichnet, dass** den Vorsprüngen (18) Schrägflächen (20) zugeordnet sind, an denen das erste Bauteil (A) anliegt, um eine axiale Spielfreiheit trotz Dickenschwankungen des ersten Bauteils (A) sicherzustellen.

10. Schnellverschluss nach einem der vorhergehenden Ansprüche, **dadurch gekennzeichnet, dass** der Verschlusskörper (28) des Verschlussbolzens (4) einen zylindrischen Schaftabschnitt (30), einen Anlageabschnitt (32), einen Konturabschnitt (34) und einen Kopfabschnitt (36) aufweist, wobei diese Abschnitte jeweils ineinander übergehen und zwischen dem Konturabschnitt (34) und dem Kopfabschnitt (36) ein Hinterschnitt für die Rastverbindung zwischen dem Aufnahmeteil (2) und dem Verschlussbolzen (4) vorgesehen ist.

11. Schnellverschluss nach Anspruch 10, **dadurch gekennzeichnet, dass** der zylindrische Schaftbereich (30) des Verschlusskörpers (28) einen solchen Durchmesser hat, dass er in der Rastposition von einem quadratischen Endbereich (9) des Kastenprofil-Körpers (6) des Aufnahmeteils (2) spielfrei aufgenommen wird.

12. Schnellverschluss nach Anspruch 10 oder 11, **dadurch gekennzeichnet, dass** der Anlageabschnitt (32) des Verschlusskörpers (28) zwei ebene Anlageflächen (3 8) aufweist, die bezüglich einer ersten Axialebene (A1) spiegelsymmetrisch und zu einer gegenüber dieser um 90° gedrehten zweiten Axialebene (A2) mittig angeordnet sind und zu der ersten Axialebene (E1) jeweils um einen solchen Neigungswinkel (α) geneigt sind, dass die Anlageflächen (38) in der Rastposition an entsprechend geneigten ebenen Innenflächen (11) der Federschenkel (10) anliegen.

13. Schnellverschluss nach Anspruch 12, **dadurch gekennzeichnet, dass** die außerhalb der beiden Anlageflächen (38) befindliche Oberfläche des Anlageabschnittes (32) eine axiale Verlängerung des zylindrischen Schaftabschnittes (30) bildet, so dass der Querschnitt des Anlageabschnittes (32) in Einführrichtung von einem kreisrunden Querschnitt in einen zunehmend flacher werdenden ovalen Querschnitt übergeht.

14. Schnellverschluss nach Anspruch 12 oder 13, **dadurch gekennzeichnet, dass** der Neigungswinkel (α) der beiden Anlageflächen (38) des Anlageabschnittes (32) kleiner als der Neigungswinkel (α*) ist, um den die Innenflächen (11) der Federschenkel (10) des Aufnahmeteils (2) im unverformten Zustand zu der ersten Axialebene (A1) geneigt sind.

15. Schnellverschluss nach einem der Ansprüche 12 bis 14, **dadurch gekennzeichnet, dass** die beiden Anlageflächen (38) des Anlageabschnittes (32) in den Konturabschnitt (34) hinein verlängert sind und über einen Radius (52) mit einer Schulter (50) an der Rückseite des Kopfabschnittes (36) verbunden sind, um einen Teil des Hinterschnitts für die Rastverbindung zwischen dem Aufnahmeteil (2) und dem Verschlussbolzen (4) zu bilden.

16. Schnellverschluss nach einem der Ansprüche 12 bis 15, **dadurch gekennzeichnet, dass** der Kopfabschnitt (36) des Verschlusskörpers (28) des Verschlussbolzens (4) als Suchspitze ausgebildet ist und aufweist:
zwei ebene rechteckige Führungsflächen (40), die bezüglich einer ersten Axialebene (E1) spiegelsymmetrisch angeordnet sind und zu dieser um einen vorgegebenen Neigungswinkel (β) geneigt sind,
zwei ebene Ausschubflächen (42), die bezüglich einer zu der ersten Axialebene (E1) um 90° versetzten zweiten Axialebene (E2) spiegelsymmetrisch angeordnet und zu dieser um einen vorgegebenen Neigungswinkel (γ) geneigt sind, und
vier ebene Schrägflächen (44), die jeweils eine Führungsfläche (40) mit einer Ausschubfläche (42) verbinden und sowohl zu der ersten wie auch zu der zweiten Axialebene (E1, E2) geneigt sind, um beim Einführvorgang durch Zusammenwirken mit den Federschenkeln (10) des Aufnahmeteils (2) den Verschlussbolzen (4) in Richtung auf die Rastposition zu drehen, wenn sich der Verschlussbolzen (4) beim Einführvorgang in einer von der Rastposition abweichenden entsprechenden Drehposition befindet.

17. Schnellverschluss nach Anspruch 16, **dadurch gekennzeichnet, dass** der Winkel (δ), um den die in Radialebenen liegenden Ränder (46) der Schrägflächen (44) gegenüber der zweiten Axialebene (E2) geneigt sind, größer als der Selbsthemmungswinkel ist, der durch den Reibbeiwert zwischen den Materialien des Aufnahmeteils (2) und Verschlussbolzens (4) bedingt ist.

18. Schnellverschluss nach Anspruch 16 oder 17, **dadurch gekennzeichnet, dass** der zwischen dem Anlageabschnitt (32) und dem Kopfabschnitt (36) liegende Konturabschnitt (34) einen an ein Rechteck angenäherten ovalen Querschnitt mit geraden Seiten und abgerundeten Eckbereichen (56) aufweist, die bezüglich der Schrägflächen (44) des Kopfabschnittes (36) so angeordnet sind, dass sie beim Einführvorgang durch Zusammenwirken mit den Federschenkeln (10) des Aufnahmeteils (2) den Verschlussbolzen (4) in die Rastposition drehen, wenn sich der Verschlussbolzen (4) beim Einführvorgang in einer von der Rastposition abweichenden entsprechenden Drehposition befindet.

19. Schnellverschluss nach einem der Ansprüche 16 bis 18, **dadurch gekennzeichnet, dass** die beiden Ausschubflächen (42) des Kopfabschnittes (36) über den Konturabschnitt (34) bis zum Anlageabschnitt (32) verlängert sind und ihr Neigungswinkel (δ) bezüglich der zweiten Axialebene (E2) größer als der Selbsthemmungswinkel ist, der durch den Reibwert zwischen den Materialien des Aufnahmeteils (2) und Verschlussbolzens (4) bedingt ist, um den Verschlussbolzen (4) selbsttätig aus dem Aufnahmeteil (2) auszuschieben, wenn der Verschlussbolzen (4) aus der Rastposition um 90° in eine Freigabeposition gedreht wird.
